# FASCICULE DE BREVET EUROPEEN

(11) **EP 0 450 413 B1**
(45) Date de publication et mention de la délivrance du brevet: **04.01.1995**
(21) Numéro de dépôt: 91104399.0
(22) Date de dépôt: 21.03.1991
(51) Int. Cl.: F16H 35/10

(54) **Dispositif de sécurité pour limiter la charge axiale d'une vis sans fin et presse munie de ce dispositif**
Sicherheitseinrichtung zur Begrenzung der axialen Last einer Endlosschraube und mit dieser Einrichtung ausgestattete Presse
Security device for limiting the axial load of an endless screw and press equiped with this security device

(30) Priorité: 03.04.1990 CH 1113/90
(43) Date de publication de la demande: 09.10.1991
(73) Titulaire: BOBST S.A., CH-1001 Lausanne (CH)
(72) Inventeur: Modoux, Joseph, CH-1040 Echallens (CH)
(74) Mandataire: Colomb, Claude

(56) Documents cités:
- CH-A- 391 413
- FR-A- 2 538 490
- GB-A- 2 102 910
- GB-A- 2 118 090
- US-A- 2 467 426

## Description

La présente invention concerne un dispositif de sécurité pour contrôler ou limiter dans une machine la charge axiale de travail d'une vis sans fin, tel que défini dans le préambule de la revendication 1, ainsi qu'une presse destinée du travail d'éléments en plaques ou feuilles telle que definie dans le préambule de la revendication 15.

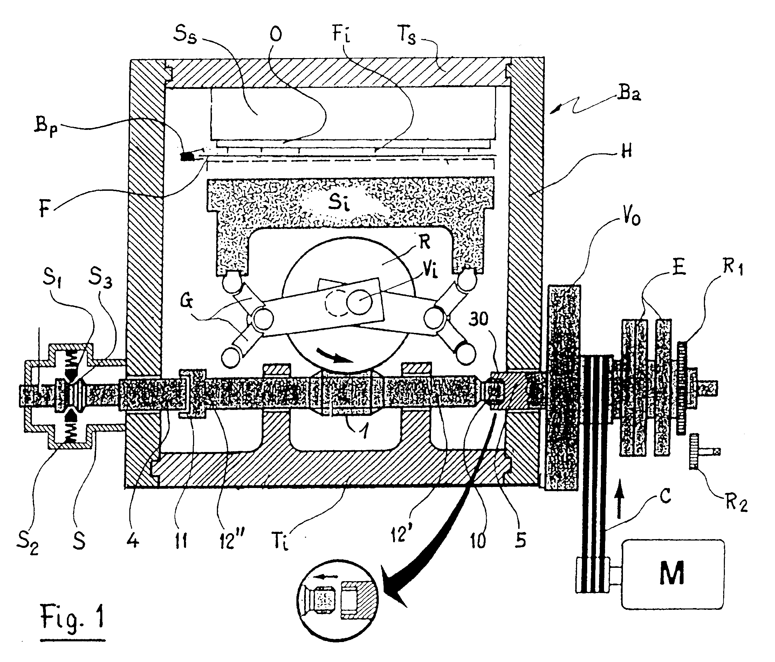

Un tel dispositif de sécurité est connu du document FR-A-1 337 828 et peut être utilisé, par exemple, dans une presse de façonnage telle que représentée schématiquement dans la figure 1 du dessin annexé. Une telle presse comprend un bâti Ba constitué de montants latéraux H, d'une traverse supérieure Ts et inférieure Ti, d'un sommier supérieur fixe Ss et d'un sommier inférieur mobile Si. Entre les deux sommiers Si, Ss est amenée, à l'aide d'une barre à pinces Bp montée sur un train de chaînes (non représenté), une feuille de carton F destinée à être découpée par des filets coupeurs Fi prévus sur un outil O monté sur le sommier supérieur Ss. Pendant l'opération de découpage, le sommier inférieur Si est déplacé - à l'aide d'un ensemble constitué d'une vis sans fin 1, d'une roue R, d'un vilebrequin Vi et de genouillères G - d'un point mort bas (représenté en traits continus) à un point mort haut (représenté en traits discontinus) et vice-versa. L'entraînement de la vis sans fin 1 est réalisé par un moteur M. Entre le moteur M et la vis sans fin 1 sont interposés successivement une courroie d'entraînement C, un embrayage-frein E, un volant Vo et un accouplement de sécurité constitué d'une couronne dentée 30 fixée sur l'arbre 5 du volant Vo et d'une denture 10 prévue à une première extrémité 12' de l'arbre 12 de la vis sans fin 1. L'arbre 12 est monté en rotation libre et longitudinalement déplaçable sur le bâti Ba de la machine. A la seconde extrémité de l'arbre 12, est prévu un système de sécurité S destiné à limiter la charge axiale de l'arbre 12 et constitué d'un bout d'arbre 4 non rotatif relié par un support d'accouplement 11 à l'arbre 12 de la vis sans fin 1. Ce bout d'arbre 4 est longitudinalement maintenu en place par des verrous coniques S1 en prise avec une gorge S3 correspondante prévue sur ce même bout d'arbre 4. Les verrous S1 sont pressés en direction de la gorge S3 par des ressorts S2. Lorsque le couple demandé à la vis sans fin 1 devient trop grand, sous l'effet de la poussée axiale qui en résulte, la vis sans fin 1 se déplace et pousse le bout d'arbre 4 à l'encontre des verrous S1 qui vont s'écarter en comprimant les ressorts S2. Au-delà d'une certaine amplitude de la force axiale, les verrous ne seront plus en prise avec le bout d'arbre 4 et la denture 10 sortira de la couronne dentée 30.

Les principaux motifs, qui ont exigé de prévoir, dans une presse à travailler des feuilles, le dispositif de sécurité décrit ci-dessus, sont les suivants :
- un bourrage peut se produire quelque part dans la machine, ce qui entraîne un décalage du train de chaînes qui transporte les barres de pinces Bp au travers de la machine. Une barre Bp risque alors d'être coincée entre les deux sommiers Si et Ss à l'instant du point haut du système genouillères G - vilebrequin Vi;
- un objet ou un outil a été oublié entre les deux sommiers Si et Ss lors du montage de l'outil O ou contre-outil (non représenté);
- deux feuilles F ont été introduites simultanément;
- pour une raison quelconque, il s'est produit une force excessive se traduisant par un couple élevé sur la vis sans fin 1. Un tel cas peut arriver lorsqu'un nombre élevé de poses (ou flans) à découper simultanément entraîne une trop grande force de travail.

D'autres dispositifs de sécurité de contrôle de la charge axiale d'une vis sans fin sont aussi décrits dans FR-A-1337828, US-A-2467426 et US-A-902527.

Si les dispositifs prévus jusqu'à ce jour pour contrôler la charge axiale d'une vis sans fin satisfont aux conditions requises de sécurité proprement dite, c'est-à-dire que, par exemple, dans le cas de la presse de découpage de feuilles, le dispositif de sécurité S autorise, lors d'une surcharge axiale, un dégagement suffisamment sûr et rapide de la vis sans fin 1 par rapport à l'entraînement du volant Vo et moteur M; ces mêmes dispositifs ont toutefois tous l'inconvénient d'entraîner, lorsqu'il s'agit de les remettre en état de fonctionner après une surcharge axiale, une longue interruption de la machine en cours de production qui, dans le cas, par exemple, du dispositif décrit ci-dessus, peut aller jusqu'à une ou deux heures. A ce jour, où précisément tous les moyens sont recherchés et mis en jeu pour augmenter au maximum les cadences de production d'une telle machine, une interruption aussi longue n'est plus admissible.

C'est donc le but de la présente invention de fournir un dispositif de contrôle de sécurité de la charge axiale d'une vis sans fin dont le temps nécessaire à sa recharge - ou remise en fonction - après une surcharge soit réduit au minimum.

Ce but est atteint grâce à un dispositif de sécurité selon la revendication 1.

La revendication indépendante 15 se rapporte à une presse dont le sommier mobile est entraîné par une vis sans fin comportant le dispositif de sécurité de la revendication 1.

Il sera maintenant décrit un mode de réalisation de l'invention en référence au dessin annexé dans lequel:
- la figure 1 représente une presse de découpage et/ou de façonnage de feuilles de carton munie d'un dispositif de sécurité selon l'art antérieur;
- les figures 2 à 4 sont des vues en coupe d'une vis sans fin munie d'un dispositif de contrôle de sécurité selon la présente invention à différents états de fonctionnement.

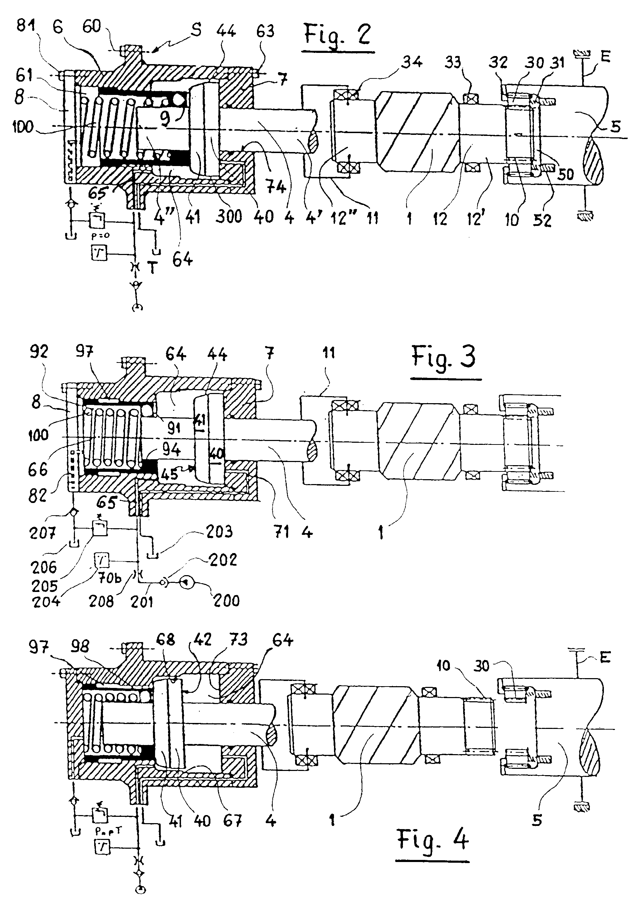

Les figures 2 à 4 représentent schématiquement une vis sans fin 1 du même genre que celle décrite plus haut en référence à la figure 1. C'est pourquoi les signes de référence pour les éléments des figures 2 à 4 qui correspondent à ceux représentés dans la figure 1 seront les mêmes que ceux déja utilisés. Il est à remarquer que le moteur M, la courroie C, le volant Vo et les engrenages R1, R2 (ces derniers sont prévus pour l'entraînement d'organes autres que ceux de la presse proprement dite) représentés dans la figure 1 ont été omis dans les figures 2 à 4, car ils ne sont pas absolument indispensables à la compréhension de la présente invention.

Ainsi donc, la première extrémité 12' de l'arbre 12 de la vis sans fin 1 est montée en rotation libre dans une palier à roulements 33. Le bout de la première extrémité 12' a la forme d'un pignon denté 10 en prise avec la denture intérieure d'une couronne 30 dont une denture extérieure est en prise avec une denture correspondante réalisée à la périphérie intérieure d'un alésage 50 d'un arbre d'entraînement 5 relié à un embrayage-frein E. Une rondelle 32, fixée au bout de l'arbre 5, empêche la couronne dentée 30 de s'échapper hors de l'alésage 50. De plus, des ressorts de compression 31 interposés entre l'arbre 5 et la couronne dentée 30 poussent cette dernière en direction de la rondelle 32. La seconde extrémité 12'' de l'arbre 12 de la vis sans fin 1 est montée en rotation libre à l'intérieur de paliers 34 prévus dans un support d'accouplement 11 déplaçable parallèlement à l'axe de la vis sans fin 1. L'accouplement 11 a pour fonction de relier la deuxième extrémité 12'' de l'arbre 12 de la vis sans fin 1 à une première extrémité 4' d'un arbre auxiliaire 4 non rotatif, la liaison étant ainsi faite qu'elle autorise un déplacement simultané longitudinal des deux arbres 1 et 4 mais non un déplacement longitudinal de l'un par rapport à l'autre. Dans ce but, le support d'accouplement 11 et le palier à roulements 33 sont montés déplaçables longitudinalement dans la machine (par exemple dans des coulisses prévues sur la traverse inférieure Ti de la presse de découpage). L'arbre auxiliaire 4 a la forme d'un piston monté déplaçable à l'intérieur d'un carter 6 du dispositif de sécurité S de limitation de la force axiale de la vis sans fin 1. Le carter 6, fixé au moyen de vis 60 au bâti de la machine, est muni d'un alésage 61 dont l'axe se situe dans le prolongement de celui de la vis sans fin 1. Un premier couvercle 7, fixé par des vis 63 au carter 6, ferme l'alésage 61 du côté de la vis sans fin 1. Le couvercle 7 est muni d'une ouverture 74 au travers de laquelle coulisse la première extrémité 4' de l'arbre auxiliaire 4.

La figure 2 représente la vis sans fin à l'état de repos, c'est-à-dire à un état dans lequel la force axiale agissant sur la vis sans fin 1 résulte uniquement de certaines inerties mécaniques d'éléments de la machine, par exemple du poids du sommier inférieur Si de la presse de découpage. De plus, la liaison de la vis sans fin 1 avec la roue dentée R est telle que lesdites forces d'inertie ou de gravité créent une force axiale qui a tendance à pousser la vis sans fin 1 dans une direction opposée au côté où se trouve la couronne dentée 30. En vue de s'opposer à cet force axiale de repos, un ressort de compression 100 est prévu. Une première extrémité du ressort 100 prend appui sur un deuxième couvercle 8 fermant la seconde extrémité de l'alésage 61 du carter 6 auquel il est fixé par des vis 81. La seconde extrémité du ressort 100 prend appui (mais indirectement, par l'intermédiaire d'un piston de recharge 9, comme on le verra par la suite) sur une première surface axiale 45 d'une partie, sous forme de piston 44, de l'arbre auxiliaire 4. Dans cet état, la seconde surface axiale 42 du piston 44 est en contact avec une surface d'appui 73 prévue sur le premier couvercle 7.

La figure 3 représente la vis sans fin à l'état de travail, par exemple lorsque le sommier inférieur Si de la presse à découper des feuilles de carton est entraîné en mouvement. Dans cet état de travail, étant donné que le ressort 100 est dimensionné pour s'opposer uniquement aux forces d'inertie mentionnées plus haut mais non aux forces de travail, par exemple de découpage, des moyens supplémentaires doivent être prévus pour s'opposer au déplacement axial de la vis sans fin 1. Il est à remarquer que la liaison entre vis sans fin 1 et roue dentée R est aussi conçue de manière que les forces de travail provoquent une force axiale agissant dans un sens opposé au côté où se trouve la couronne dentée 30, c'est-à-dire vers la gauche dans les figures 1 à 4. Ces moyens supplémentaires sont intégrés dans le dispositif de sécurité S muni d'un système hydromécanique de maintien et d'échappement de la vis sans fin 1 avec recharge automatique, comprenant essentiellement trois pièces principales :
- un piston 44, dit piston de maintien, monté sur l'arbre auxiliaire 4;
- un piston de recharge 9; et
- un carter 6 muni d'un alésage 61 formant une chambre de maintien 64 et une chambre de recharge 66.

Le piston de recharge 9 divise l'alésage 61 du carter 6 en deux chambres étanches, à savoir la chambre de maintien 64 et la chambre de recharge 66. Le piston de recharge 9 est monté étanche par rapport aux parois de l'alésage 61 de façon à ce que l'huile ne puisse pas s'écouler d'une chambre à l'autre. La chambre de recharge 66 est donc fermée, d'un côté, par le second couvercle 8 et, de l'autre côté, par le piston mobile de recharge 9. La chambre de maintien 64 est fermée, d'un côté, par le piston mobile de recharge 9 et, de l'autre côté, par le premier couvercle 7. Le piston de recharge 9 est aussi agencé de manière que sa périphérie forme avec l'alésage 61 une chambre variable 97 reliée à la chambre de maintien 64 par un étranglement sous forme d'au moins une fine rainure 98 réalisée dans la périphérie du piston 9. Lorsque la chambre de maintien 64 est mise sous pression, à l'aide d'un premier orifice 65 relié à une pompe 200 par des conduits 201, et que le piston 44 est au contact de la surface d'appui 73, le piston de recharge 9 est poussé vers la gauche, c'est-à-dire en direction du second couvercle 8. Pour permettre à l'huile sous pression de venir agir à l'encontre de la face droite du piston de recharge 9, ceci avant tout déplacement de ce dernier vers la gauche, de fines rainures 91 sont réalisées dans cette même section. Un clapet anti-retour 202 et un régleur de débit 208 sont interposés entre la pompe 200 et l'orifice 65. De même, un pressostat 204 est prévu. Etant donné que le piston de maintien 44 se trouve aussi dans la chambre 64, lorsque cette dernière est mise sous pression :
- le piston de maintien 44 pousse la vis sans fin 1 vers la droite de façon à maintenir, à l'encontre de la charge axiale de travail, le pignon 10 en prise avec la couronne dentée 30,
- le ressort 100, dont la deuxième extrémité (voir plus haut) est en appui avec le fond d'une cavité 92 du piston de recharge 9, cavité renfermant complètement le ressort 100, est comprimé, autorisant ainsi le piston de recharge 9 à venir buter contre le deuxième couvercle 8.

La pression d'huile crée dans la chambre de maintien 64 doit donc être suffisante :
- pour écarter le piston de recharge 9 par rapport au piston de maintien 44; et
- pour maintenir le piston de maintien 44 en contact avec la surface d'appui 73 du couvercle 7 et ainsi maintenir en place la vis sans fin 1 sous l'effort maximum des forces en jeu lors du travail normal de la machine ou presse.

La chambre 66 est reliée, au moyen d'un orifice 82 débouchant, au travers du couvercle 8 et par des conduits, à la pompe 200, un limiteur de pression 205 étant interposé entre l'orifice 82 et la pompe 200. Un clapet anti-retour 207 est aussi interposé entre l'orifice 82 et le limiteur de pression 205.

A l'instant où, pour un des motifs mentionnés plus haut, la force axiale agissant sur la vis sans fin 1 dépasse la valeur maximale tolérée par la chambre de maintien 64, le piston de maintien 44 se déplace légèrement vers la gauche en forçant une petite quantité d'huile au travers du limiteur 205 et en créant ainsi un espace libre entre la première surface 42 du piston 44, espace dans lequel l'huile sous pression va immédiatement s'infiltrer. A cet instant, un conduit d'écoulement 71, prévu au travers du couvercle 7 et des parois du carter 6, laisse échapper dans un récipient 203 l'huile de la chambre 64. Le conduit d'échappement 71 a pour fonction de créer une légère dépression dans l'espace encore relativement étroit situé entre la surface d'appui 73 et la seconde surface axiale 42 du piston 44 de manière à accélérer l'infiltration de l'huile dans cet espace, au début de la course du piston de maintien 44 vers la gauche. Pour autoriser un déplacement rapide du piston de maintien 44, un espace libre 300 est laissé entre la surface radiale périphérique de ce piston 44 et les parois de la chambre de maintien 64, espace libre au travers duquel l'huile contenu dans le volume situé du côté de la première surface 45 peut librement et rapidement s'écouler dans le volume situé du côté de la seconde surface 42 du piston 44. Pour contrôler, lors de la recharge du système (décrite par la suite), la vitesse du déplacement longitudinal de la vis sans fin 1, la section transversale de la portion gauche de la chambre de maintien 64 est réduite par rapport à celle de droite pour qu'à cet endroit, c'est-à-dire entre les parois 68 de la chambre 64 et la surface périphérique du piston 44, se produise un phénomène d'étranglement hydraulique agissant comme amortisseur de l'inertie linéaire de l'arbre auxiliaire 4 et de la vis sans fin 1. De même, la partie gauche 41 du piston 44 possède une forme conique arrondie destinée à faciliter son déplacement vers la gauche à l'endroit du décrochement où débute la section réduite 67 de la chambre 64. La surface périphérique de la partie droite 40 du piston 44 est parallèle aux parois de la chambre 64.

Ainsi donc, dans la figure 4 qui représente la vis sans fin 1 à l'état de surcharge ou d'échappement, le pignon 10 n'est plus en prise avec la couronne dentée 30 de l'arbre d'entraînement 5. A cet instant, la surcharge, dans le cas d'une presse de découpage, stoppe, par l'intermédiaire d'un dispositif de mesure (non représenté) de la pression de travail des deux sommiers Si et Ss, la rotation de l'arbre d'entraînement 5 par le frein pneumatique E. Le volant Vo et le moteur M continuent toutefois de tourner par leur inertie mais sans effet sur la presse. Dans cet état, où la vis sans fin 1 peut librement tourner, le sommier inférieur Si, sous l'effet de son propre poids, descend vers le point mort bas, entraînant en rotation, par l'intermédiaire du système vilebrequin Vi - grenouillères G, la roue dentée R qui va tirer en arrière le train de chaînes transportant les barres à pinces Bp (en effet, dans une telle machine, pour des raisons de synchronisation, le train de chaînes est entraîné à partir d'une poulie de l'arbre du vilebrequin Vi). De plus, la vis sans fin 1 et le piston de maintien 44 sont poussés en direction du piston de recharge 9. Il est à noter que le sommier inférieur Si peut tout de même aller au delà du point mort bas après surcharge, auquel cas il retombe aussi au point mort bas, ce qui entraîne que la vis sans fin 1, poussée par la roue dentée R qui doit tourner dans le sens opposé au premier cas envisagé, est entraînée en rotation dans un sens qui la force à se déplacer vers la droite, c'est-à-dire en direction de la couronne dentée 30. Mais ce déplacement vers la droite, freiné par la masse importante (environ 100kg) du système arbre - vis - accouplement 4, 1, 11 ne se fera que lentement.

En conséquence, étant donné que le déplacement de l'ensemble vis sans fin 1 - piston 44 est très rapide, du fait que l'huile de maintien ne doit pas être évacuée dans des tuyaux - le dispositif de contrôle décrit ci-dessus satisfait à l'une des principales conditions de fonctionnement requises pour la sécurité désirée, à savoir celle de la rapidité de réponse à une surcharge soudaine et imprévue.

Reste maintenant à décrire de quelle manière le dispositif est rechargé, c'est-à-dire remis en état de fonctionnement après son échappement lors d'une surcharge.

En réalité, la recharge est simple. En effet, à partir de l'état représenté dans la figure 4, où la pression d'huile est proche de zéro car l'orifice 71 est ouvert, c'est le ressort 100 qui repousse l'arbre 4 par l'intermédiaire du piston 9. Ce mouvement a lieu en douceur car le piston 9 est freiné par l'huile devant s'écouler par l'étranglement 98. Le piston de recharge 9 pousse le piston de maintien 44 jusqu'à ce que ce dernier vienne en contact avec la surface d'appui 73 du couvercle 7. Lors de cette opération, la vis sans fin 1 est entraînée en rotation par la roue R, bloquée par le sommier Si. Ensuite, la denture 10 entre au contact de la couronne dentée 30.

Les ressorts 31, d'une part, autorisent un léger déplacement de la couronne dentée 30 dans le sens de l'axe de la vis sans fin 1 et ont, d'autre part, pour fonction de faciliter un positionnement angulaire correct de la denture 10 par rapport à cette couronne dentée 30. Lorsque la denture 10 a réellement pénétré à l'intérieur de la couronne dentée 30 creuse, la vis sans fin 1 se trouve à nouveau dans la position représentée à la figure 2. A ce moment-là, l'orifice 71 est fermé et la pression d'huile est à nouveau créée dans la chambre de maintien 64. Comme déjà décrit plus haut, la vis sans fin 1, avec l'ensemble de son dispositif de contrôle de sécurité, se mettra dans l'état de travail tel que représenté dans la figure 3, la pression d'huile ayant aussi repoussé le piston 9 contre le couvercle 8.

Dans le cas le plus fréquent où le sommier inférieur Si retombe avant le point mort bas ou reste bloqué au point haut, la vis sans fin 1 reste poussée en direction du piston de maintien 44. Le débit d'huile de la pompe 200 peut subsister et est évacué par l'orifice 71 du carter 6. La vis sans fin 1 est ensuite repoussée par le piston de recharge 9, lui-même entraîné par le ressort 100, vers la couronne dentée 30. Durant ce déplacement, la vis sans fin 1 tourne à cause de la réaction des dentures de la roue R. Ce déplacement se fait également lentement puisqu'il est freiné par l'huile qui doit s'écouler au travers de l'étranglement constitué par la partie droite 40 du piston 44 et les parois 66 de la section rétrécie 67 de la chambre 64 comme décrit plus haut. Tant que la vis sans fin 1 n'est pas dans une position telle que le pignon 10 soit totalement en prise avec la couronne dentée 30, la pression d'huile dans le carter 6 ne peut pas monter. Lorsque la vis sans fin 1 est en place, l'orifice d'écoulement 71 est obturé, la pression d'huile monte et le piston de recharge 9 est repoussé à gauche vers sa position d'attente, le ressort 100 étant comprimé. Un contrôle électrique de la pression (non représenté) donne alors l'ordre de freiner à nouveau l'arbre d'entraînement 5. A cet instant, et bien sûr pour autant qu'il n'y ait pas eu de décalage de chaînes lors de la surcharge, le moteur principal M entraînant le volant Vo peut être mis en marche, et la machine peut redémarrer. A partir du moment où il y a eu surcharge, les opérations de recharge du dispositif de sécurité décrites ci-dessus durent 5 à 10 secondes.

## Revendications

1. Dispositif de sécurité pour limiter dans une machine la charge axiale de travail d'une vis sans fin, dans lequel :
- la vis sans fin (1) est montée sur un arbre rotatif principal (12) dont une première extrémité (12') est munie de moyens (10) de liaison en rotation avec des moyens correspondants (30) d'un arbre d'entraînement (5);
- la seconde extrémité (12'') de l'arbre principal (12) est prolongée par un arbre auxiliaire (4), non rotatif, relié à un système de sécurité (S) autorisant, dans le cas d'une surcharge axiale, un déplacement longitudinal de la vis sans fin (1) de manière à annuler, du côté de ladite première extrémité (12'), la liaison en rotation de l'arbre principal (12) avec l'arbre d'entraînement (5);
caractérisé en ce que:
- le système de sécurité (S) comprend une chambre étanche (64), dite de maintien, munie au moins d'un premier orifice (65) d'amenée d'huile sous pression et dans laquelle l'arbre auxiliaire (4) débouche sous la forme d'un piston (44) dit de maintien;
- ledit piston (44) est muni d'une première surface (45) sur laquelle l'huile sous pression agit de manière à maintenir en place la vis sans fin (1) en exerçant une force de sens opposé à celle de ladite charge axiale, et d'une seconde surface (42), de dimension au moins égale, opposée à la première surface (45), prenant appui, lorsque l'huile est sous pression, contre une surface correspondante (73) de la paroi (7) de la chambre (64) de manière à limiter le déplacement de la vis sans fin (1) dans le sens résultant de l'action de la pression d'huile sur la première surface (45) du piston (44);
- au moins un passage (300) est prévu pour laisser librement s'écouler l'huile contenu dans le volume de la chambre (64) situé du côté de la première surface (45) dans le volume situé du côté de la seconde surface (42) du piston (44); et
- des moyens (205) sont prévus qui, lors d'une surpression dans la chambre (64) provoquée par une surcharge axiale, autorisent un léger échappement d'huile de la chambre (64), de manière à permettre un déplacement du piston (44) dans un sens opposé à celui résultant de la pression d'huile sur la première surface (45), cette pression d'huile agissant ensuite sur les deux côtés du piston (44), éliminant ainsi son rôle de maintien.

2. Dispositif selon la revendication 1, caractérisé en ce que le déplacement du piston (44), lors d'une surcharge axiale dans un sens opposé à celui résultant de la pression d'huile sur la première surface (45), provoque la mise en échappement libre d'un second orifice (71) débouchant dans la chambre (64) au niveau de la surface d'appui (73), de manière à accélérer l'infiltration d'huile dans cet espace au début de la course du piston de maintien (44).

3. Dispositif selon la revendication 1 ou 2, caractérisé en ce que le système de sécurité (S) comprend un second piston (9), dit de recharge, destiné à pousser l'arbre auxiliaire (4) et donc la vis sans fin (1) dans le sens opposé à celui qui a résulté de la surcharge axiale.

4. Dispositif selon l'une des revendications précédentes, caractérisé en ce que le système de sécurité (S) comprend un ressort (100) destiné à maintenir, lorque la vis sans fin (1) est au repos et que la chambre de maintien (64) n'est pas sous pression, le piston (44) contre la surface d'appui (73) de la chambre (64).

5. Dispositif selon la revendication 4, caractérisé en ce que :
- le système de sécurité (S) comprend un carter (6) muni d'un alésage (61) intérieur dont l'axe se trouve dans le prolongement de celui de la vis sans fin (1);
- l'alésage (61) est fermé à une première extrémité par un premier couvercle (7) muni d'une ouverture (74) au travers de laquelle l'arbre auxiliaire (4) peut coulisser de façon étanche;
- l'alésage (61) renferme successivement, à partir du premier couvercle (7), la chambre de maintien (64) avec son piston (44), le piston de recharge (9) et une chambre de recharge (66) dans laquelle se trouve le ressort (100) dont une extrémité prend appui sur un deuxième couvercle (8) fermant la deuxième extrémité de l'alésage (61), l'autre extrémité du ressort (100) prenant appui sur le piston de recharge (9); et
- des moyens (82, 205, 65, 200, 208) étant prévus pour emmener l'huile sous pression dans la chambre de maintien (64) de manière que, lorsque la chambre (64) est mise sous pression, le piston de recharge (9) s'écarte du piston de maintien (44) en comprimant le ressort (100).

6. Dispositif selon l'une des revendications précédentes, caractérisé en ce que le passage d'huile (300) est formé par un espace laissé libre entre la périphérie radiale du piston (44) et les parois de la chambre (64).

7. Dispositif selon la revendication 5, caractérisé en ce que le piston de recharge (9) est du genre creux à l'intérieur duquel pénètre au moins en partie le ressort (100).

8. Dispositif selon la revendication 6, caractérisé en ce que l'arbre auxiliaire (4) est muni d'un prolongement (4''), s'étendant au-delà du piston (44), le piston de recharge (9) étant muni d'une ouverture (94) au travers de laquelle ledit prolongement (4'') peut coulisser de façon étanche.

9. Dispositif selon la revendication 7, caractérisé en ce que sur la section transversale du piston de recharge (9) faisant face au piston de maintien (44) sont réalisés de fins passages (91) destinés à faciliter la mise sous pression d'huile de ladite section lorsque le piston de recharge (9) est en appui contre la première surface (45) du piston de maintien (44).

10. Dispositif selon l'une des revendications précédentes, caractérisé en ce qu'entre les parois (66) de la chambre de pression (64) et la périphérie du piston de maintien (44) est réalisé un phénomène d'étranglement hydraulique destiné à contrôler la vitesse du déplacement longitudinal de la vis sans fin (1) lors de la recharge du système.

11. Dispositif selon la revendication 10, caractérisé en ce que le piston de maintien (44) est constitué d'une première partie (40) dont la périphérie radiale est parallèle aux parois de la chambre de pression (64), et d'une seconde partie (41) de forme conique arrondie destinée à faciliter le passage du piston de maintien (44) à un endroit où débute un rétrécissement (67) de la chambre de pression (64) destiné à réaliser ledit étranglement hydraulique.

12. Dipositif selon l'une des revendications précédentes, dans lequel la liaison en rotation de la première extrémité (12') de l'arbre principal (12) avec l'arbre d'entraînement (5) est réalisée à l'aide d'un pignon (10) monté sur cette extrémité (12') et destiné à venir en prise avec la denture intérieure d'une couronne (30) fixée sur l'arbre d'entraînement (5), caractérisé en ce qu'un ressort (31) réalise une fixation longitudinale élastique de la couronne dentée (30) sur l'arbre (5).

13. Dispositif selon l'une des revendications précédentes, dans lequel des moyens d'accouplement (11, 34) sont prévus entre la seconde extrémité (12'') de l'arbre principal (12) et une extrémité (4') de l'arbre auxiliaire, caractérisé en ce que les moyens d'accouplement comprennent un support (11) longitudinalement déplaçable, au moins un palier (34) de rotation pour la seconde extrémité (12'') de l'arbre principal (12), et des moyens de fixation longitudinale et en rotation de ladite extrémité (4') de l'arbre auxiliaire (4) par rapport au support (11).

14. Dispositif selon l'une des revendications précédentes, caractérisé en ce que la commande de l'huile sous pression est réalisée à l'aide d'une pompe (200), d'un pressostat (204), d'un clapet anti-retour (202) et d'un contrôleur de débit (208) placés sur les conduits (201) situés entre la pompe (200) et le premier orifice (65) de la chambre de maintien (64), d'un limiteur de pression (205) et d'un clapet anti-retour (207) placés sur les conduits (201) situés entre la pompe (200) et l'orifice (82) d'amenée d'huile sous pression à la chambre de recharge (66).

15. Presse destinée au travail, tel que découpage, d'éléments en plaques ou feuilles en vue de la production d'emballages, comprenant un sommier mobile (Si), caractérisée en ce que l'entraînement dudit sommier (Si) est réalisé à l'aide d'une vis sans fin (1) munie d'un dispositif de contrôle de sécurité de la charge axiale selon l'une des revendications précédentes.

16. Presse selon la revendication 15, comprenant un bâti (Ba) constitué d'une traverse supérieure (Ts) sur laquelle est monté un sommier supérieur fixe (Ss), d'une traverse inférieure (Ti) sur laquelle prennent appui des moyens de déplacement vertical (R, Vi, G) du sommier mobile inférieur (Si), de la vis sans fin (1) destinée à l'entraînement desdits moyens de déplacement vertical (R, Vi, G) et montée en rotation sur des paliers (33, 34) longitudinalement coulissables dans des guides prévus sur ladite traverse inférieure, caractérisée en ce que le support d'accouplement (11) entre arbre principal (12) et arbre auxiliaire (4) est monté coulissant dans un guide de la traverse inférieure du bâti (Ba).

## Claims

1. Safety device for limiting in a machine the axial operating load exerted on a drive worm in which:
- the drive worm (1) is fitted on a rotary main shaft (12) whose first end (12') is provided with connecting means (10) rotating with the corresponding means (30) of a drive shaft (5);
- the second end (12'') of the main shaft (12) is extended by an auxiliary, though non-rotary, shaft (4) connected to a safety device (S) enabling, in the event of an axial overload, a lengthwise shift of the drive worm (1) so as to annul the rotary connection of the main shaft (12) with the drive shaft (5) at the aforesaid first end (12');
characterized by the fact that:
- the safety device (S) comprises a tight so-called holding chamber (64) provided with at least a first pressurized oil inlet (65) into which the auxiliary shaft (4) extends in the form of what may be called a holding piston (44);
- the said piston (44) is provided with a first surface (45) on which the pressurized oil acts so as to hold the drive worm (1) steady by exerting a force contrary to the one of the said axial load, and with a second surface (42) with at least equal dimensions and situated opposite the first surface (45), supported, with the oil pressurized, by a corresponding surface (73) of the wall (7) of the chamber (64) in such a way as to limit the shift of the drive worm (1) in the direction resulting from the action of the oil pressure exerted on the first surface (45) of the piston (44);
- at least one passage (300) is foreseen for a free flowing of the oil contained within the chamber (64) situated on the side of the first surface (45) within the space situated on the side of the second surface (42) of the piston (44); and
- means (205) are foreseen which, in the event of overpressure in the chamber (64) caused by an axial overload, enable a slight discharge of oil from the chamber (64) so as to enable a shift of the piston (44) in the direction opposite the one resulting from the oil pressure exerted on the first surface (45), the said pressure acting then on the two sides of the piston (44) and thus eliminating its holding task.

2. Device according to claim 1, characterized by the fact that the shift of the piston (44), in the event of an axial overload in the direction opposite the one resulting from the oil pressure exerted on the first surface (45), will cause a second orifice (71) to open for free circulation and leading into the chamber (64) at the level of the contact surface (73) so as to accelerate penetration of oil into this space in the incipient phase of the stroke of the holding piston (44).

3. Device according to claim 1 or 2, characterized by the safety device (S) comprising a second, so-called reloading, piston (9) destined to push the auxiliary shaft (4) and, thereby the drive worm (1) in the direction opposite the one due to the axial overload.

4. Device according to one of the aforementioned claims, characterized by the safety device (S) comprising a spring (100) destined to hold the piston (44) against the contact surface (73) of the chamber (64) when the drive worm (1) is at rest and the holding chamber (64) not under pressure.

5. Device according to claim 4, characterized by:
- the safety device (S) comprising a housing (6) provided with a bore (61) whose axis is aligned with the one of the drive worm (1);
- the bore (61) being closed at its first end by a first lid (7) provided with an opening (74) across which the auxiliary shaft (4) may slide with full tightness;
- the bore (61) containing successively from the first lid (7) onwards, the holding chamber (64) with its piston (44), the reloading piston (9) and a reloading chamber (66) serving as a seat for the spring (100) whose one end is supported by a second lid (8) closing the second end of the bore (61) whereas the other end of the spring (100) is supported by the reloading piston (9); and
- means (82, 205, 65, 200, 208) being designed for carrying the pressurized oil into the holding chamber (64) so that with the chamber (64) pressurized, the reloading piston (9) will move away from the holding piston (44) by compressing the spring (100).

6. Device according to one of the aforementioned claims, characterized by the oil passage (300) consisting of a space left free between the radial periphery of the piston (44) and the walls of the chamber (64).

7. Device according to claim 5, characterized by the reloading piston (9) being of a hollow design taking up at least part of spring (100).

8. Device according to claim 6, characterized by the auxiliary shaft (4) being provided with an extension (4'') extending beyond the piston (44), the reloading piston (9) being provided with an aperture (94) through which the said extension (4'') may slide with full tightness.

9. Device according to claim 7, characterized by the fact that the crosswise section of the reloading piston (9) situated opposite the holding piston (44) has small passages (91) enabling easier pressurization of the oil in the said section with the reloading piston (9) is in contact with the first surface (45) of the holding piston (44).

10. Device according to one of the aforementioned claims, characterized by the fact that between the walls (66) of the pressure chamber (64) and the periphery of the holding piston (44) a hydraulic throttle is to check the lengthwise shifting speed of the drive worm (1) during the reloading of the system.

11. Device according to claim 10, characterized by the holding piston (44) consisting of a first part (40) with a radial periphery parallel to the walls of the pressure chamber (64), and a second part (41) with a tapered shape and a round top designed for ensuring an easier motion of the holding piston (44) in an area where the pressure chamber (64) has a narrowing section (67) ending up in the hydraulic throttle.

12. Device according to one of the aforementioned claims, in which the rotary connection of the first end (12') of the main shaft (12) with the drive shaft (5) is achieved by means of a pinion (10) fitted on the said end (12') and destined to engage with the inner teeth of a rim (30) fitted on the drive shaft (5), characterized by a spring (31) ensuring a lengthwise elastic way of fastening the toothed rim (30) on the shaft (5).

13. Device according to one of the aforementioned claims, in which coupling means (11, 34) are foreseen between the second end (12'') of the main shaft (12) and an end (4') of the auxiliary shaft, characterized by the coupling means comprising a lengthwise shiftable support (11), at least one rotary bearing (34) for the second end (12'') of the main shaft (12) and means for lengthwise and rotary fastening of the said end (4') of the auxiliary shaft (4) with regard to the support (11).

14. Device according to one of the aforementioned claims, characterized by the fact that pressurization of the oil is controlled by means of a pump (200), a pressostat (204), a no-return flap (202) and a flow control (208) which are all located on pipes (201) situated between the pump (200) and the first orifice (65) of the holding chamber (64), as well as of a pressure limiter (205) and a no-return flap (207) fitted on the pipes (201) situated between the pump (200) and the pressurized oil input orifice (82) into the reloading chamber (66).

15. Press destined for processing, ie cutting, plate or sheetlike workpieces with the purpose of producing packagages, comprising a movable beam (Si) and characterized by the drive of the said beam (Si) being achieved by means of a drive worm (1) provided with a safety device controlling the axial load according to one of the aforesaid claims.

16. Press according to claim 15, comprising a frame (Ba) consisting of an upper crossbar (Ts) carrying an upper fixed beam (Ss) of a lower crossbar (Ti) the latter supporting means for vertical shifting (R, Vi, G) of the lower movable beam (Si), of the drive worm (1) ensuring the drive of the said vertical shifting means (R, Vi, G) and fitted rotarily on bearings (33, 34), the latter sliding lengthwise within guides foreseen on the lower crossbar, characterized by the coupling support (11) between the main shaft (12) and the auxiliary shaft (4) being fitted for sliding motion within a guide of the lower crossbar of the frame (Ba).

## Patentansprüche

1. Sicherheitsvorrichtung zur Begrenzung der axialen Arbeitslast einer Endlosschraube in einer Maschine, wobei bei besagter Vorrichtung :
- die Endlosschraube 1 auf einer Hauptwelle (12) angeordnet ist, deren erstes Ende (12') mit Verbindungsmitteln (10) versehen ist, die mit entsprechenden Mitteln (30) einer Antriebswelle (5) drehen;
- das zweite Ende (12'') der Hauptwelle (12) durch eine nichtdrehende Hilfswelle (4) verlängert wird, die mit einer Sicherheitsvorrichtung (S) verbunden ist, welche bei axialer Überlastung eine Längsverschiebung der Endlosschraube (1) bewirkt, um auf der Seite des besagten ersten Endes (12') die Rotationsverbindung der Hauptwelle (12) mit der Antriebswelle (5) unterbricht,
dadurch gekennzeichnet, dass :
- die Sicherheitsvorrichtung (S) eine dichte, sogenannte Festhaltekammer (64) umfasst, die wenigstens eine erste Öffnung (65) für die Zufuhr von Öl unter Druck aufweist und in welche die Hilfswelle (4) in der Form eines sogenannten Festhaltekolbens (44) einmündet;
- der besagte Kolben (44) mit einer ersten Fläche (45) versehen ist, auf welche das Öl unter Druck so einwirkt, dass die Endlosschraube (1) fest gehalten kann, indem es eine Kraft ausübt, die derjenigen der axialen Last entgegenwirkt sowie mit und einer zweiten Fläche (42) mit wenigstens gleicher Abmessung gegenüber der ersten Fläche (45), die bei unter Druck stehendem Öl auf der entsprechenden Fläche (73) der Wand (7) der Kammer (64) in der Weise eine Abstützung findet, dass die Verschiebung der Endlosschraube 1 in der Richtung, die sich aus der Einwirkung des Öldrucks auf die erste Fläche (45) des Kolbens (44) ergibt, begrenzt wird,
- wenigstens ein Durchgang (300) vorgesehen ist, um das Öl vom Teil der Kammer (64) auf der Seite der ersten Fläche (45) in den Teil auf der Seite der zweiten Fläche (42) des Kolbens (44) frei abfliessen zu lassen;
- Mittel (205) vorgesehen sind, die bei Auftreten eines Überdrucks in der Kammer (64) durch axiale Überlastung ein leichtes Austreten des Öls von der Kammer (64) gestatten, um eine Verschiebung des Kolbens (44) in der Gegenrichtung zu derjenigen, welche sich aus dem Öldruck auf die erste Fläche (45) ergibt, wobei der Öldruck anschliessend auf den beiden Seiten des Kolbens (44) einwirkt und dadurch ihre Festhalteaufgabe aufhebt.

2. Vorrichtung gemäss Patentanspruch 1, dadurch gekennzeichnet, dass die Verschiebung des Kolbens (44) bei einer axialen Überlastung in der Gegenrichtung zu derjenigen, die sich aus dem Öldruck auf die erste Fläche (45) ergibt, den freien Auslass aus der zweiten Öffnung (71) in die Kammer (64) auf der Höhe der Abstützfläche (73) verursacht, um das Eindringen von Öl in diesen Ram bei Beginn der Bewegung des Festhaltekolbens (44) zu beschleunigen.

3. Vorrichtung gemäss Patentanspruch 1 oder 2, dadurch gekennzeichnet, dass die Sicherheitsvorrichtung (S) einen zweiten sogenannten Wiedereinrückkolben (9) umfasst, der dazu bestimmt ist, die Hilfswelle (4) und damit auch die Endlosschraube (1) in der Gegenrichtung zu derjenigen, welche sich aus der axialen Überlastung ergibt, zu drücken.

4. Vorrichtung gemäss einem der vorerwähnten Patentansprüche, dadurch gekennzeichnet, dass die Sicherheitsvorrichtung (S) eine Feder (100) umfasst, die dazu bestimmt ist den Kolben (44) gegen die Stützfläche (73) der Kammer (64) zu drücken, wenn sich die Endlosschraube (1) in Ruhestellung und die Festhaltekammer (64) nicht unter Druck befindet.

5. Vorrichtung gemäss Patentanspruch 4, dadurch gekennzeichnet, dass :
- die Sicherheitsvorrichtung (S) ein Gehäuse (6) umfasst, das eine Innenbohrung (61) aufweist, deren Achse ihre Verlängerung in derjenigen der Endlosschraube (1) findet;
- die Bohrung (61) an einem Ende durch einen ersten Deckel 7 geschlossen ist, der eine Öffnung (74) umfasst, durch welche die Hilfswelle (4) völlig dicht gleiten kann;
- die Bohrung (61) vom ersten Deckel (7) ausgehend nacheinander die Festhaltekammer (64) mit ihrem Kolben (44) den Wiedereinrückkolben (9) und eine Einrückkammer (66) einschliesst, in der die Feder (100) angeordnet ist, deren eines Ende sich auf den zweiten Deckel 8 abstützt, der das zweite Ende der Bohrung (61) verschliesst, während das andere Ende der Feder (100) sich auf den Wiedereinrückkolben 9 abstützt, sowie
- Mittel (82, 205, 65, 200, 208) vorgesehen sind, um das Öl unter Druck in die Festhaltekammer (64) so zu befördern, dass, wenn die Kammer (64) unter Druck gesetzt wird, der Wiedereinrückkolben (9) sich vom Festhaltekolben (44) durch Zusammendrücken der Federn (100) entfernt.

6. Vorrichtung gemäss einem der vorerwähnten Patentansprüche, dadurch gekennzeichnet, dass der Öldurchfluss (300) durch einen freien Raum zwischen der Radialperipherie des Kolbens (44) und den Wänden der Kammer (64) gebildet wird.

7. Vorrichtung gemäss Patentanspruch 5, dadurch gekennzeichnet, dass der Wiedereinrückkolben (9) hohl ausgebildet ist, in welchen wenigstens ein Teil der Feder (100) eindringt.

8. Vorrichtung gemäss Patentanspruch 6, dadurch gekennzeichnet, dass die Hilfswelle (4) mit einer Verlängerung (4'') versehen ist, die sich über den Kolben (44) hinaus erstreckt, wobei der Wiedereinrückkolben (9) mit einer Öffnung (94) versehen ist, durch welche die besagte Verlängerung (4'') völlig dicht gleiten kann.

9. Vorrichtung gemäss Patentanspruch 7, dadurch gekennzeichnet, dass am Querschnitt der Wiedereinrückkolben (9), der dem Festhaltekolben (44) gegenübersteht, kleine Durchgänge (91) angebracht und dazu bestimmt sind, die Unterdrucksetzung des Öls des besagten Querschnitts, wenn der Wiedereinrückkolben auf der ersten Fläche (45) des Festhaltekolbens (44) Abstützung findet, zu erleichtern.

10. Vorrichtung gemäss einem der vorerwähnten Patentansprüche, dadurch gekennzeichnet, dass zwischen den Wänden (66) der Druckkammer (64) und der Peripherie des Festhaltekolbens (44) eine hydraulische Drosselung bewirkt wird, die dazu bestimmt ist, die Längsverschiebegeschwindigkeit der Endlosschraube (1) beim Wiedereinrücken der Vorrichtung zu überwachen.

11. Vorrichtung gemäss Patentanspruch 10, dadurch gekennzeichnet, dass der Festhaltekolben (44) aus einem ersten Teil (40) besteht, dessen Radialperipherie parallel zu den Wänden der Druckkammer (64) sowie einem zweiten Teil mit konischer abgerundeter Form zum leichteren Übergang des Festhaltekolbens (44) auf die Stelle, in welcher die Verlängung (67) der Druckkammer zu Erzielung der besagten hydraulischen Drosselung beginnt.

12. Vorrichtung gemäss einem der vorerwähnten Patentansprüche, in welcher die Drehverbindung des ersten Endes (12') der Hauptwelle (12) mit der Antriebswelle (5) mit Hilfe eines Ritzels (10) erzielt wird, das auf dem besagten Ende (12') befestigt und dazu bestimmt ist, mit der Innenverzahnung des Zahnkranzes (30) in Eingriff zu kommen, welch letztere auf einer Antriebswelle (5) angeordnet ist, dadurch gekennzeichnet, dass eine Feder (31), die eine elastische Längsbefestigung für den Zahnkranz (30) auf der Welle (5) gewährleistet.

13. Vorrichtung gemäss einem der vorerwähnten Patentansprüche, in welcher Kupplungsmittel (11, 34) zwischen dem zweiten Ende (12'') der Hauptwelle (12) und einem Ende (4') der Hilfswelle vorgesehen sind, dadurch gekennzeichnet, dass die Kupplungsmittel einen längsverschiebbaren Halter (11), wenigstens eine Drehlagerschale (34) für das zweite Ende (12'') der Hauptwelle (12) sowie Mittel für die Befestigung in Längs- und Drehrichtung des besagten Endes (4') der Hilfswelle (4) in bezug auf den Halter (11) umfassen.

14. Vorrichtung gemäss einem der vorerwähnten Patentansprüche, dadurch gekennzeichnet, dass die Steuerung des Öls unter Druck mit Hilfe einer Pumpe (200), eines Druckreglers (204), einer Rückschlagklappe (202) und eines Fördermengenüberwachungsgeräts (208) auf den Leitungen (201) zwischen der Pumpe (200) und der ersten Öffnung (65) der Festhaltekammer (64), eines Druckbegrenzers (205) und einer Rückschlagklappe (207) auf den Leitungen (201) zwischen der Pumpe (200) und der Öffnung (82) für den Zufluss von Öl unter Druck in die Wiedereinrückkammer (66) bewirkt wird.

15. Presse für die Bearbeitung, zum Beispiel durch Stanzen, von platten- oder bogenartigen Werkstücken für die Herstellung von Verpackungen, mit einem beweglichen Stanzbalken (Si), dadurch gekennzeichnet, dass der Antrieb des besagten Stanzbalkens (Si) durch eine Endlosschraube (1) mit einer Sicherheitsvorrichtung für die Überwachung der axialen Belastung gemäss einem der vorerwähnten Patentansprüche bewerkstelligt wird.

16. Presse gemäss Patentanspruch 15 mit einem Gestell (Ba), das aus einem oberen Querbalken (Ts), an welchen der feste obere Stanzbalken (Ss) befestigt ist, einem unteren Querbalken (Ti), an welchem Mittel zur vertikalen Verschiebung (R, Vi, G) des beweglichen unteren Stanzbalkens (Si) Abstützung finden, der Endlosschraube (1), die zum Antrieb der besagten Mittel für die vertikale Bewegung (R, Vi, G) bestimmt und drehend auf den längs verschiebbaren Lagern (33, 34) in Führungen an dem besagten unteren Querbalken besteht, dadurch gekennzeichnet, dass der Kupplungshalter 11 zwischen der Hauptwelle (12) und der Hilfswelle (4) gleitend in eine Führung des unteren Querbalkens im Gestell (Ba) eingebaut ist.
